Europäisches Patentamt

European Patent Office

Office européen des brevets

(19)

(11) Publication number: **0 065 423**
**A1**

# (12) EUROPEAN PATENT APPLICATION

(21) Application number: **82302517.6**

(22) Date of filing: **18.05.82**

(51) Int. Cl.³: **G 09 G 1/16, G 06 F 15/20**

(30) Priority: **19.05.81 US 265247**

(43) Date of publication of application: **24.11.82**
**Bulletin 82/47**

(84) Designated Contracting States: **IT**

(71) Applicant: **Western Electric Company, Incorporated, 222 Broadway, New York, N.Y. 10038 (US)**

(72) Inventor: **Fleming, James Richard, 7262 Tottenham Drive, Indianapolis Indiana 46250 (US)**

(74) Representative: **Buckley, Christopher Simon Thirsk et al, Western Electric Company Limited 5 Mornington Road, Woodford Green Essex IG8 OTU (GB)**

(54) **Method and appratus for compiling digital image information.**

(57) Video data bus 8, video memory modules VM1–VMN, and bus arbitration circuits BAC1–BACN interact to provide digital image information for display. Data processor 1 addresses the video memory modules via bus 2, in order to assign a priority value to picture element data stored in the video memory modules. Upon command of the data processor, a frame 5 or 300 of picture element data is serially compiled on bus 8. Contention between Video memory modules for access to the video data bus is controlled by the bus arbitration circuits, the highest priority value of the picture element data gaining access. In one embodiment, the priority value represents the depth of a point of a solid object for display and/or the relative depth of picture element data comprising the object for display. The data processor may change the priority value associated with picture element data for display as well as the coordinates of data location in the display. Accordingly, textual characters having the highest priority and solid objects having a lesser priority may appear to move in front of one another on a background having the lowest priority value without interference in a sequence of frames of information for display.

METHOD AND APPARATUS FOR COMPILING

DIGITAL IMAGE INFORMATION

Background of the Invention

1. Technical Field

This invention relates to display systems and, more particularly, to a method and apparatus for compiling digital image information for display.

2. Description of the Prior Art

A number of systems for generating digital data for display are available. One such system generates addresses by permitting video data processing subsystems to intercommunicate, their activities being governed by a clock and interrupt system.

Two problems remain largely unsolved in such systems. The hidden line problem concerns the determination for display purposes of which edges of a solid, nontransparent object are visible (and which invisible) from a given vantage point. Thus, it is desirable in display systems to allow a first solid object to appear to cover a second solid object; the second solid object, a third, and so on. Available solutions to this problem generally are complex, thus requiring considerable processor time.

The processing time consumed in solving the hidden line problem precludes solution of the second problem which is to provide animation in digital image display systems. The animation problem overlaps the hidden line problem and comprises the following subset of problems: size enlargement (zooming), movement, and rotation of a solid object. These are desirable characteristics of an animated display system, but practical solutions to the animation problem are not available.

Presently available approaches include the development of sophisticated animation languages which, to a degree, increase the speed of processing. Animation processors perform complex transformations on the three dimensional surfaces of solid objects.

## Summary of the Invention

These problems are solved in accordance with the principles of the present invention in which each one of a plurality of video memory modules has an associated arbitration circuit which resolves conflicts among modules concerning access to a particular video display point via a common video data bus by awarding access to that picture element (pel) data having the highest priority value related to the depth of picture element data competing for display.

The priority value need not be confined to solid objects in the present invention. Textual picture element data having a high priority value may supersede object picture element data on which it appears which in turn may supersede background picture element data. In other words, ASPEN STATION may appear on the sign of a railroad station whose background comprises hilly terrain. No processing time is required because the arbitration occurs as a natural incident of data transmission from video memory to a video display controller. However, under control of a data processor or separate animation processor, the enlargement, movement, and rotation of a solid object may be changed in accordance with animation languages known in the art. For example, a boxcar of a train may grow in size and rotate as it moves across a video display. The priority value and the degree of depth of the object for display may be changed. In this manner, not only is the hidden line problem solved but animation may be achieved.

## Brief Description of the Drawing

FIG. 1 is a schematic drawing and block diagram of a digital image display system employing the principles of the present invention;

FIG. 2 is a schematic drawing of one bus arbitration circuit which may be employed in accordance with the principles of the present invention;

FIG. 3 is a pictorial representation of the hidden line and animation problems solved by the principles of the present invention, pictorially showing a railroad train winding around a mountain, passing a train station and crossing a bridge, the train being viewable through the trestles of the bridge; and

FIG. 4 is a schematic drawing and block diagram of the digital image display system of FIG. 1 showing three video memory modules contending for access to a video data bus.

Detailed Description

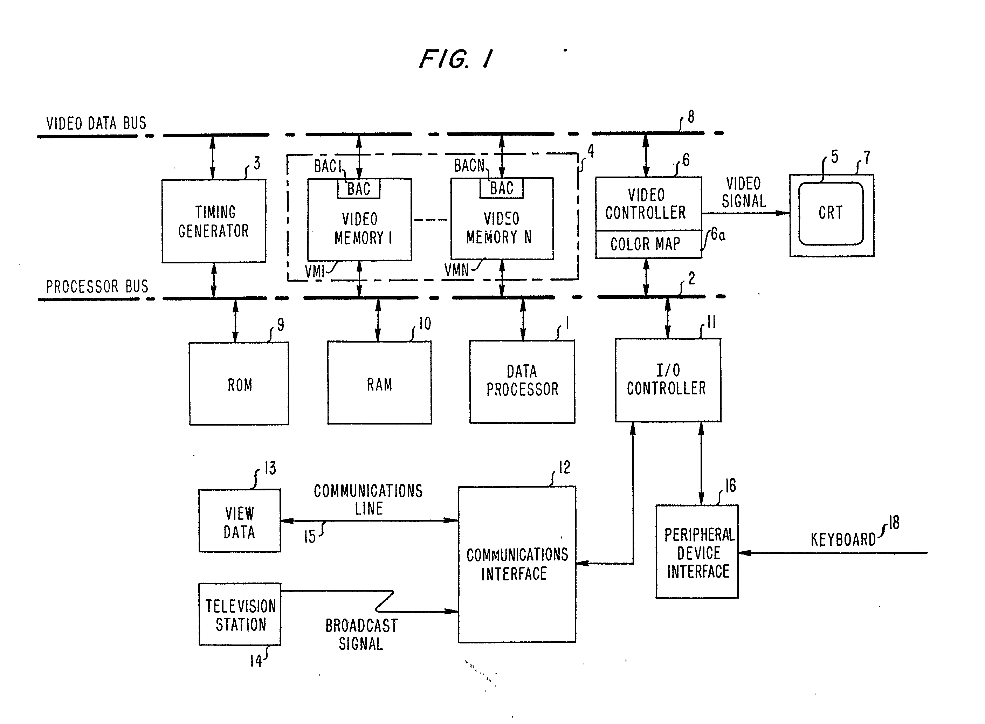

Referring more particularly to FIG. 1, there is shown a schematic drawing and general block diagram of a digital image display system employing the principles of the present invention. The digital image display system comprises a data processor 1 having bi-directional access to a processor bus 2. A separate timing generator 3 may provide the clock signals required on bus 2; however, in some systems, it may be desirable to provide timing generator capability in processor 1. Generator 3 may also provide the timing signals on a video bus 8 for use by video memory 4, which may comprise a plurality of video memory modules VM1-VMN, and by a video controller 6.

Bus arbitration circuits BAC1-BACN are associated with corresponding video memory module VM1-VMN. The bus arbitration circuit resolves contention of picture element data among modules VM1-VMN for access to bus 8. The winning picture element data from memory 4 is compiled on bus 8 for transmission to controller 6 which, in turn, operates video display 7 responsive to the picture element data received over bus 8. During an animation sequence of frames of picture element data, complete frames 5 of picture element information are sequentially displayed.

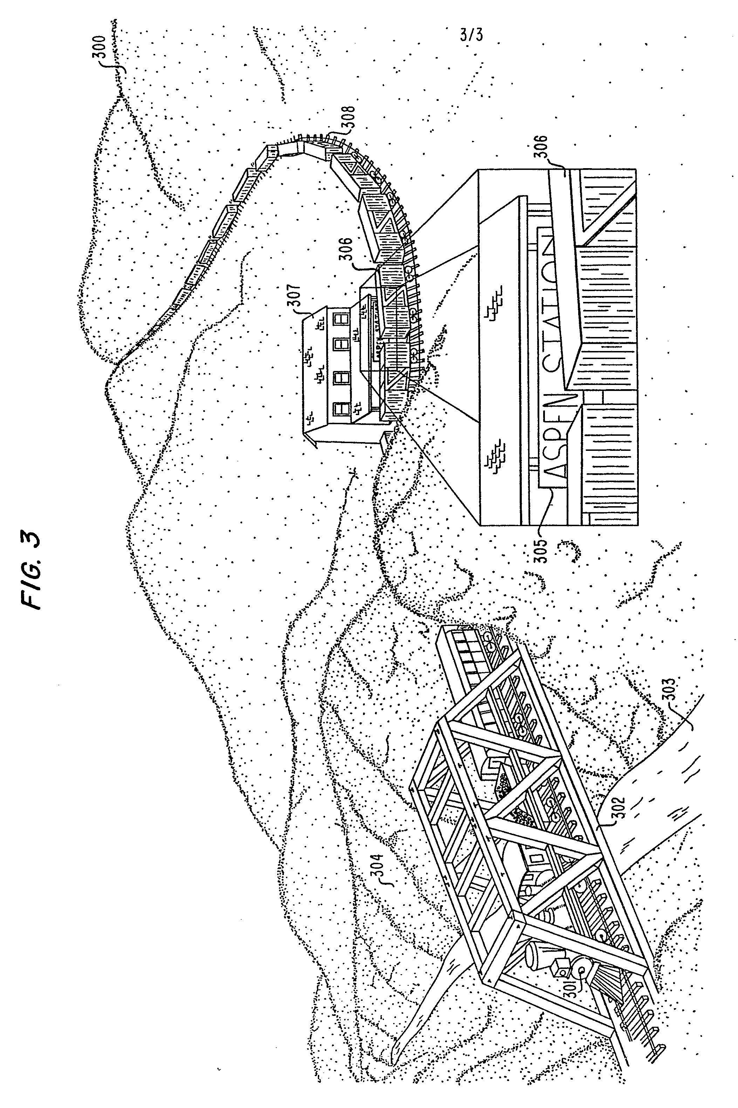

FIG. 3 illustrates the operation of the above-described components and their operative relationship to a digitized image or frame for display 300. Taking for a first example the presentation of a railroad engine 301 for display, the engine may be stored as picture element data in memory 1 comprising a plurality of points on the solid surfaces of the engine as coordinates in two dimensions of X and Y as well as a third priority value related to the depth dimension. The picture element data of bridge 302, river 303, and hilly terrain 304, may similarly be stored in module VM1 or other video memory modules. When a particular point of picture element data is to be displayed, memory 4, is addressed and commanded to provide for display that picture element data having the highest priority value. This may comprise the front trestles of bridge 302, in preference to engine 301, in preference to river 303 or hilly terrain 304. Bus arbitration circuits BAC1-BACN, control the access of the picture element data to bus 8.

Referring again to FIG. 1, processor 1 may be a microprocessor comprising read only memory 9 and scratch pad or random access memory 10. Memory 9 may store complex animation data for manipulating surfaces of solid objects, or a separate animation processor (not shown) may be provided having separate read only memory. In a viewdata or teletext terminal which may be located in a residence, it is desirable that processor 1 be as small as possible. Accordingly, a microprocessor may be assumed, the application of a separate animation processor (not shown) being likely if complex animation is required. As previously described, processor 1 may generate timing pulses for the video display system in place of timing generator 3.

Processor 1 responds to user input from a keyboard, light pen or other data input device known in the art through peripheral device interface 17. Processor 1 may modify memory 4, generator 3 and controller 6 so as to provide the proper modes of operation which will allow maximum flexibility in remotely reconfiguring the terminal operating characteristics.

In its application with a viewdata or teletext terminal, processor 1 may also respond to input provided from a remote or centralized data base such as one located at a television broadcast station 14 or a provider of viewdata services 13. Such inputs are provided through communications interface 12. In the case of teletext services, the signal provided by station 14 is received at interface 12. In the case of viewdata services 13, a data signal is received over communications line 15 at interface 12. Input/output controller 11, under user control, provides selective access to the various data input arrangements.

Bus 2 is a bi-directional conduit through which processor 1 controls memory 4, generator 3 and controller 6. Several bus structures may be adapted for use in the present invention, but whichever structure is chosen, the bus must have address capability, a data path and control lines which may include interrupt, reset, clock (for synchronous use), wait (for asynchronous use), and bus request lines.

Generator 3 may provide the timing signals on both bus 2 and the bus 8. It may comprise a chain of programmable logic circuits, digital dividers and counters for providing required timing signal outputs. These may, as previously discussed, be incorporated into processor 1. For operation of bus 8, a number of different timing signals are required. Horizontal and vertical drive signals are provided in accordance with horizontal and field rates respectively. A dot clock signal is provided at the dot frequency (picture element or pel rate) of the system. An odd/even field signal indicates if the odd or even field is to be displayed in an interlaced system. A composite blanking signal indicates if video is being displayed or if vertical or horizontal retrace is occurring. Also, a group clock signal may be provided to indicate when to access data for a new group of picture element data from memory. For example, picture element data in video memory having a slow access time may be serially provided in groups of 4, 8 or 16 picture elements. On the other hand, a parallel data transmission scheme is possible, potentially increasing the requirements for leads of bus 8.

Controller 6 accepts digital image information from bus 8, pel-by-pel, and converts the digital information, if necessary, to analog form for presentation on display 7. Controller 6 may be in modular form and comprises three components: 1) color map 6a 2) digital to analog conversion and sample and hold circuits, if required by display 7, and 3) a video encoder and an RF modulator, if necessary, for antenna lead-in access to display 7.

Color map 6a comprises look-up tables in random access memory and is indexed by the pel data of coordinates and priority value entering controller 6. For example, if ten bits of color data are compiled per picture element, 1024 color choices are possible, eight each of red, green and blue, the primary colors.

The color map output may be provided to three separate digital to analog converters, one for each primary color. In accordance with techniques generally known in the art, the RGB output may enter display 7 directly, may first be converted to a composite video signal or be modulated to a particular RF frequency for input through an antenna lead-in. Display 7, may either be a monitor or a television set and may additionally comprise other forms of video display known in the art including liquid crystal or LED.

Memory 4 comprises video memory modules VM1 to VMN. These modules generally accept input from processor 1 in the form of an image comprising digitized picture element information. Modules VM1 to VMN store the information until rearrangement of data occurs and periodically passes the pel information over bus 8 to controller 6. The x and y coordinates and priority value of a pel are employed to index a particular color code in color map 6a, the priority value relating to the depth of the pel for display.

Bus 8 connects generator 3 and memory 4 to controller 6. It comprises data leads for picture element information and for indexing into the color map memory of video controller 6, arbitration leads for providing priority value information, and timing leads for providing video timing and control. In one embodiment which provides 1024 color choices, eight leads are provided for bus arbitration and data transmission among eight pels (10 bits of data are transmitted serially over the 8 leads) and six leads are provided for timing and control. The six timing and control leads transmit horizontal and vertical drive signals and various clock signals.

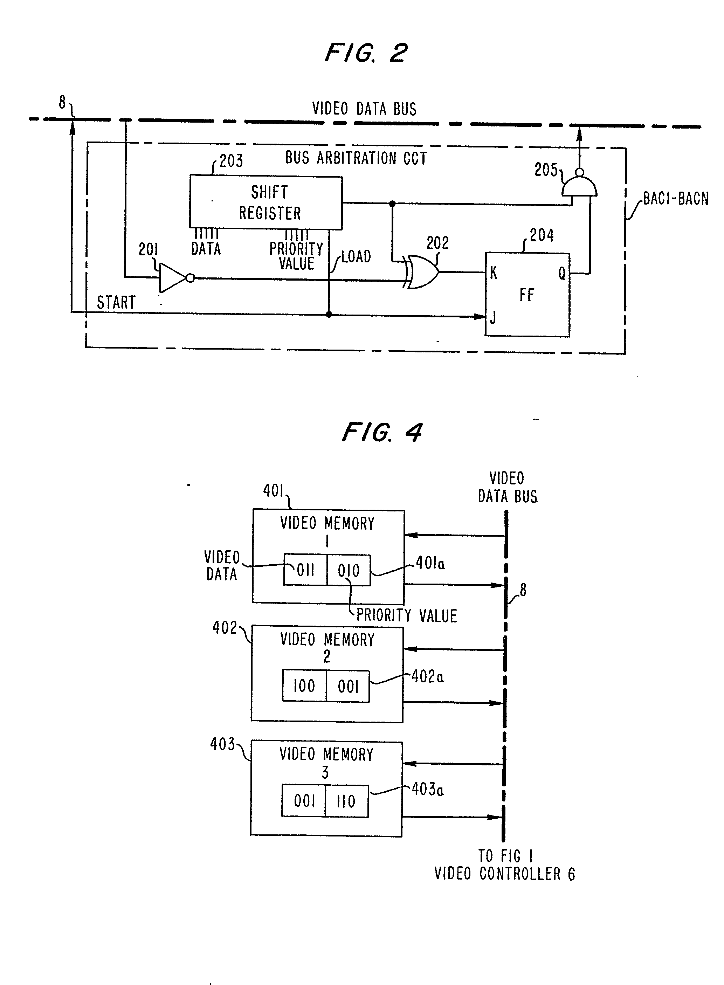

Each memory VM1 to VMN comprises a bus arbitration circuit BAC1→BACN for controlling access among competing memories VM1→VMN for access to bus 8. FIG. 2 depicts the bus arbitration circuit which comprises an inverter circuit 201 for intercepting the data value on bus 8 at a particular time for comparison with the transmitted data signal at exclusive OR circuit 202. Flip flop circuit 204 is initially activated by the group clock timing signal on the START lead from bus 8. If the comparison at circuit 202 indicates that its priority data value is a loser, flip flop 204 blocks the transmission of data. Shift register 203 responds to the group clock signal on the LOAD lead by shifting priority value information to NAND gate 205. If the associated memory wins contention for access to bus 8, shift register 203 continues by shifting picture element data through NAND gate 205.

FIG. 3 depicts an image 300 representing a sequence of frames for display.

Box car 306 of a train of cars may have its x and y coordinates and priority values stored in a first memory VMI. Processor 1 or a separate animation processor may effectuate its reorientation so as to change its size, location, and view. The depth values of particular objects are scaled in memory 4 to be in depth relationship to one another, the result being a priority value for bus arbitration. Thus in FIG. 3, a box car may appear as box car 306, box car 308, or in any other position of a train of cars. In order to perform rotation and enlargement, an animation processing capability is required for manipulating x, y, and depth values either in data processor 1 or a separate animation processor.

Each of the characters in ASPEN STATION, text 305, may be assigned the same priority value. This priority value will be lower than that assigned to any point on box car 306 passing in front of the railroad station sign on which the characters appear. The points comprising the railroad station 307 may be stored with the same priority value in order to conserve memory and to preclude the requirement for a separate animation processor. The immobile railroad station need not be stored as a three dimensional object unless it is anticipated that its perspective view will be changed. On the other hand, the hilly terrain 304 in which the train is anticipated to appear in an animated sequence of frames must be assigned varying priority values in order to mask the train or to permit it to be seen where appropriate.

FIG. 4 depicts an exemplary formation of a frame 300 by video memories 401-403. Picture element data generally is provided by sweeping horizontally and then through successive fields until a complete frame is transmitted. Picture element data comprising hilly terrain information 304 is provided by memory 402. It provides background data without contention until the horizontal sweep reaches station 307. At this point, memory 403, which contains picture element data for station 307, competes with memory 402 for access to bus 8.

Upon sweeping a particular character of text 305, memory 401, which contains the corresponding data, also begins to contend. Thus at this point in time in the sweep, all three memories 401, 402 and 403 are competing for access to the video data bus.

Assume, for example, that the first character A of text 305 currently is in contention and is assigned priority data value 010 which, in turn is associated with video data value 011 in memory 401 as shown in shift register 401a of the corresponding bus arbitration circuit. At memory 403, the station data value 001 is associated with priority data value 110 in register 403a. Finally the hilly terrain data value 100 is assigned priority data value 001 in register 402a of memory 402.

Upon receiving a group clock signal on their START and LOAD leads, shift registers 401a, 402a, and 403a respectively of memories 401, 402, and 403 are loaded with data. The first bit of priority value data presented to bus 8 is determined by the initial value in memories 401-403.

Video memory 402 competes initially with a 1 which loses to the 0 data values provided by memories 401 and 403. The signal output of memories 401 and 403 establishes the state of bus 8. Within the bus arbitration circuit of memory 402, a comparison is made between the current state of the bus and the output transmitted. Recognizing the difference, memory 402 ceases to compete.

Memory 401 and memory 403 remain in contention. Shift registers 401a and 403a, both serially shift the second bit of priority value data (a 1) to bus 8. Since both data values are the same, there is a tie, and the third bit of priority value data is provided by shift registers 401a and 403a.

Memory 401 and memory 403 now provide a 0 and a 1 respectively. In this instance, it is memory 401 which prevails and establishes the signal state on bus 8. Memory 403, sensing that the value returned to it from bus 8 is different from the value it transmitted, ceases to transmit data to bus 8. Thereafter, memory 401 serially shifts video data 011 representing textual character data to bus 8. Once the video data is serially loaded on bus 8, a new clock signal on the START and LOAD leads from bus 8 starts a new contention.

With each video memory added to the system depicted in FIG. 4, a new solid object may compete for display. It may be useful, therefore, to provide a number of object video memory modules.

If the video memories are provided with connectors for plug and jack connection to processor data bus 2 and video data bus 8, the flexibility of modular construction of a digital video display system is provided. A basic system might simply include one video memory for background information and a second memory for textual character generation. Additional processor and memory modules comprising bus arbitration circuits may be added by plug and jack connection to buses 2 and 8.

0065423

Claims

1. A visual display selection arrangement comprising a memory (4) and a control unit (6) for assembling information received from the memory for two dimensional graphic display,

CHARACTERIZED IN THAT

the memory (4) comprises a plurality of modules (VM1-VMN) each containing first elements which collectively form a distinct object available for display and second elements indicating the priority for display of each first element at a corresponding discrete location in the graphic display, and

an arbitration unit (BAC1-BACN) associated with each module for resolving contention among the first elements available in each module for display at the same coordinate location according to the highest indicated priority.

2. A visual display selection arrangement in accordance with claim 1

CHARACTERIZED IN THAT

the priority value assigned to each of the first elements corresponds to the depth at which the first element should appear in the graphic display.

3. A method for displaying overlapping objects on a two dimensional screen,

CHARACTERIZED BY the steps of

storing a plurality of picture elements competing for use at the same coordinate location on the screen,

assigning a priority value to each picture element according to the depth at which it should appear in the display,

selecting the element with the highest assigned priority value, and

applying the selected value to the graphic display at the corresponding coordinate location.

FIG. 1

00654 23

## FIG. 2

VIDEO DATA BUS

BUS ARBITRATION CCT

203 SHIFT REGISTER

205

BACI-BACN

DATA

PRIORITY VALUE

LOAD

202

204

201

START

K    Q

FF

J

## FIG. 4

VIDEO DATA BUS

401 VIDEO MEMORY 1

VIDEO DATA    011 | 010    401a

PRIORITY VALUE

8

402 VIDEO MEMORY 2

100 | 001    402a

403 VIDEO MEMORY 3

001 | 110    403a

TO FIG 1
VIDEO CONTROLLER 6

FIG. 3

**EUROPEAN SEARCH REPORT**

EP 82 30 2517

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP-A-0 008 324 (CHRYSLER CORP.) <br> * Figures 1,5; page 6, lines 2-37; page 18, line 33 - page 20, line 25 * | 1-3 | G 09 G 1/16 <br> G 06 F 15/20 |
| A | US-A-4 070 662 (NARVESON) <br> * Column 7, lines 11-20; column 8, lines 44-60 * | 1-3 | |
| A | WESCON CONFERENCE RECORD, vol. 24, 16th-18th September 1980, paper 2/2, lines 1-4, Anaheim, USA <br> K. GUTTAG: "The TMS 9918, video display processor for personal computers" * Page 2, right-hand column, line 20 - left-hand column, line 20 * | 1-3 | |

TECHNICAL FIELDS SEARCHED (Int. Cl. ³)

G 09 G 1/16
G 06 F 15/20

The present search report has been drawn up for all claims

| Place of search | Date of completion of the search | Examiner |
|---|---|---|
| THE HAGUE | 22-07-1982 | BAMBRIDGE J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82